# EUROPEAN PATENT APPLICATION

(11) **EP 3 309 181 A1**
(43) Date of publication of application: **18.04.2018**
(21) Application number: 16807548.9
(22) Date of filing: 09.06.2016
(51) Int. Cl.: C08C 19/25, B60C 1/00, C08F 4/08

(54) **CONJUGATED DIENE POLYMER AND METHOD FOR PRODUCTION CONJUGATED DIENE POLYMER**

(30) Priority: 11.06.2015 JP 2015118421
(71) Applicant: Zeon Corporation, Tokyo 100-8246 (JP)
(72) Inventor: SAKURAI, Takuro, Tokyo 100-8246 (JP); NISHIMURA, Saki, Tokyo 100-8246 (JP); IIZUKA, Takashi, Tokyo 100-8246 (JP)
(74) Representative: Maiwald Patentanwalts GmbH
(86) International application number: PCT/JP2016/067186
(87) International publication number: WO 2016/199842

(57) **Abstract**

A conjugated diene polymer represented by the following formula (1) is provided: 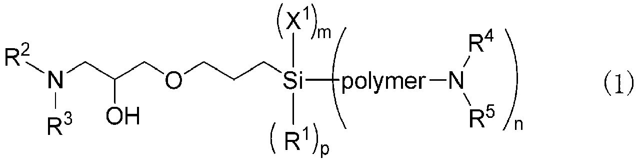 (wherein, in the formula (1), the "polymer" represents a polymer chain containing conjugated diene monomer units, X¹ represents a functional group selected from a hydrocarbyloxy group, halogen group, and hydroxyl group, R¹ represents a substituted or unsubstituted hydrocarbon group, R² and R³ respectively represent a substituted or unsubstituted hydrocarbon group, R² and R³ may bond with each other to form a ring structure together with the nitrogen atom to which they are bound, when forming the ring structure they may form a ring structure together with a hetero atom other than the nitrogen atom to which they are bound in addition to the nitrogen atom to which they are bound, R⁴ and R⁵ respectively represent a hydrogen atom, alkyl group, cycloalkyl group, aryl group, aralkyl group, a protecting group for amino group, or a group which produces a hydroxyl group when hydrolyzed, R⁴ and R⁵ may bond with each other to form a ring structure together with the nitrogen atom to which they are bound, when forming the ring structure they may form a ring structure together with a hetero atom other than the nitrogen atom to which they are bound in addition to the nitrogen atom to which they are bound, "n" is an integer of 1 to 3, "m" is an integer of 0 to 2, "p" is an integer of 0 to 2, and n+m+p = 3.)

## Description

### TECHNICAL FIELD

The present invention relates to a conjugated diene polymer and to a method of production of a conjugated diene polymer, more particularly relates to a conjugated diene polymer able to give cross-linked rubber excellent in low heat buildup and wet grip and able to be suitably used for forming a low fuel consumption tire and to a method of production of the same.

### BACKGROUND ART

In recent years, due to environmental issues and resource issues, strong demands have been placed on tires for automobile use for improving low fuel consumption. At the same time, excellent wet grip has been sought due to safety concerns. Cross-linked rubbers obtained by using a composition containing silica as a filler are superior to cross-linked rubbers obtained by using a composition containing carbon black in low heat buildup, so the rolling resistance when used for a tire becomes smaller. For this reason, by using cross-linked rubber obtained by using a composition containing silica to make tires, it is possible to obtain tires excellent in low fuel consumption.

However, even if adding silica to conventional rubber, the affinity of rubber and silica is insufficient, so these easily separate. Due to this, the processability of the rubber composition before cross-linking is poor. Further, the cross-linked rubber obtained by cross-linking this becomes insufficient in low heat buildup.

Therefore, to improve the affinity of rubber and silica, for example, it has been proposed to add various silane coupling agents such as disclosed in Patent Document 1 and Patent Document 2 to the rubber composition. However, advanced processing techniques are required for handling silane coupling agents and silane coupling agents are expensive, so if the amounts added become greater, there is the problem that tires will become higher in manufacturing costs.

To solve this problem, for example, as disclosed in Patent Document 3, Patent Document 4, etc., when using the solution polymerization method to obtain a rubber polymer, the technique of causing a modifying agent to react with the active end of the polymer so as to impart the affinity with silica to the rubber itself has been studied. However, due to the growing demand for low fuel consumption and wet grip on automobile tires in recent years, rubber able to give cross-linked rubber further excellent in low heat buildup and excellent in wet grip has been demanded.

### RELATED ART DOCUMENTS

### PATENT DOCUMENTS

Patent Document 1: Japanese Patent Publication No. 2011-46640A
Patent Document 2: Japanese Patent Publication No. 2012-17291A
Patent Document 3: Japanese Patent Publication No. H01-249812A
Patent Document 4: Japanese Patent Publication No. 2003-171418A

### SUMMARY OF THE INVENTION

### PROBLEM TO BE SOLVED BY THE INVENTION

Therefore, the present invention has as its object the provision of a conjugated diene polymer able to give cross-linked rubber excellent in low heat buildup and wet grip and a method of production of the same.

### MEANS FOR SOLVING THE PROBLEM

The inventors engaged in intensive research to achieve the above object and as a result discovered that by causing, as a modifying agent, a compound having a 1,6-dioxa-2-silacyclooctane structure where an 8-position is substituted by a tertiary amine structure-containing group to react with a conjugated diene polymer chain having an amine structure at one end and an active end at the other end so as to form a conjugated diene polymer having the amine structure at one end and a specific structure derived from the modifying agent at the other end, whereby a conjugated diene polymer able to give a cross-linked rubber excellent in low heat buildup and wet grip can be obtained. The present invention was completed based on this discovery.

Therefore, according to the present invention, there is provided a conjugated diene polymer represented by the following formula (1) : 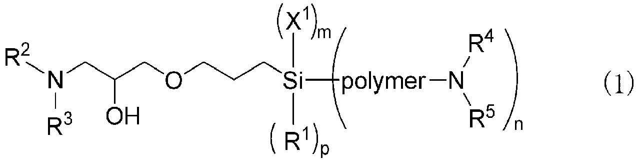 (wherein, in the formula (1), the "polymer" represents a polymer chain containing conjugated diene monomer units, X¹ represents a functional group selected from a hydrocarbyloxy group, halogen group, and hydroxyl group, R¹ represents a substituted or unsubstituted hydrocarbon group, R² and R³ respectively represent a substituted or unsubstituted hydrocarbon group, R² and R³ may bond with each other to form a ring structure together with the nitrogen atom to which they are bound, when forming the ring structure they may form a ring structure together with a hetero atom other than the nitrogen atom to which they are bound in addition to the nitrogen atom to which they are bound, R⁴ and R⁵ respectively represent a hydrogen atom, alkyl group, cycloalkyl group, aryl group, aralkyl group, a protecting group for amino group, or a group which produces a hydroxyl group when hydrolyzed, R⁴ and R⁵ may bond with each other to form a ring structure together with the nitrogen atom to which they are bound, when forming the ring structure they may form a ring structure together with a hetero atom other than the nitrogen atom to which they are bound in addition to the nitrogen atom to which they are bound, "n" is an integer of 1 to 3, "m" is an integer of 0 to 2, "p" is an integer of 0 to 2, and n+m+p = 3.)

The conjugated diene polymer of the present invention is preferably those represented by the following formula (2). 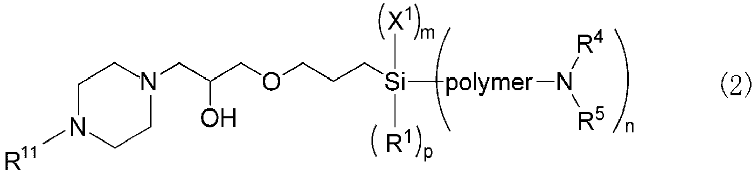 (wherein, in the formula (2), the "polymer", X¹, R¹, R⁴, R⁵, n, m, and p represent the same as those defined in the formula (1), R¹¹ represents a hydrocarbon group, and n+m+p = 3.)

According to the present invention, a rubber composition comprising 100 parts by weight of a rubber ingredient containing the conjugated diene polymer and 10 to 200 parts by weight of silica is provided.

The rubber composition further preferably comprising a cross-linking agent.

According to the present invention, a cross-linked rubber obtained by cross-linking the rubber composition is provided.

Further, according to the present invention, a tire comprising the cross-linked rubber is provided.

Further, according to the present invention, provided is a method of production of a conjugated diene polymer comprising a step of polymerizing a monomer containing a conjugated diene compound in an inert solvent using an organic alkali metal amide compound so as to obtain a conjugated diene polymer chain having an active end and a step of reacting a compound represented by the following formula (3) with the active end of the conjugated diene polymer chain having an active end: 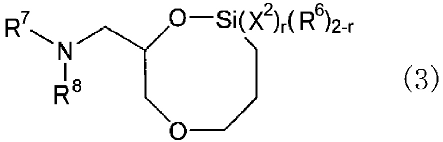 (wherein, in the formula (3), X² represents a functional group selected from a hydrocarbyloxy group, halogen group, and hydroxyl group, R⁶ represents a substituted or unsubstituted hydrocarbon group, R⁷ and R⁸ respectively represent a substituted or unsubstituted hydrocarbon group, R⁷ and R⁸ may bond with each other to form a ring structure together with the nitrogen atom to which they are bound, when forming the ring structure they may form a ring structure together with a hetero atom other than the nitrogen atom to which they are bound in addition to the nitrogen atom to which they are bound, "r" is an integer of 0 to 2.)

In the method of production of a conjugated diene polymer of the present invention, the organic alkali metal amide compound is preferably a compound represented by the following formula (4). 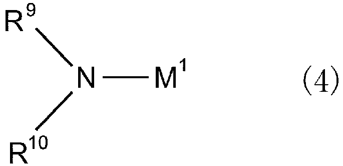 (wherein, in the formula (4), M¹ represents an alkali metal atom, R⁹ and R¹⁰ respectively represent an alkyl group, cycloalkyl group, aryl group, aralkyl group, a protecting group for amino group, or a group which produces a hydroxyl group when hydrolyzed, R⁹ and R¹⁰ may bond with each other to form a ring structure together with the nitrogen atom to which they are bound, when forming the ring structure they may form a ring structure together with a hetero atom other than the nitrogen atom to which they are bound in addition to the nitrogen atom to which they are bound.)

Further, in the method of production of a conjugated diene polymer of the present invention, the compound represented by the formula (3) is preferably a compound represented by the following formula (5). 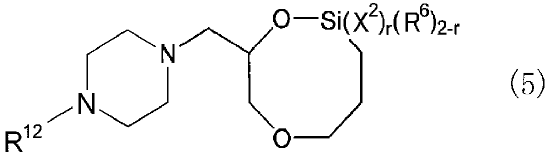 (wherein, in the formula (5), X², R⁶ and r represent the same as those defined in the formula (3), R¹² represents a hydrocarbon group.)

### EFFECTS OF THE INVENTION

According to the present invention, it is possible to provide a conjugated diene polymer able to give cross-linked rubber excellent in low heat buildup and wet grip and a method of production of the same.

### DESCRIPTION OF EMBODIMENTS

The conjugated diene polymer of the present invention is a compound represented by the following formula (1). 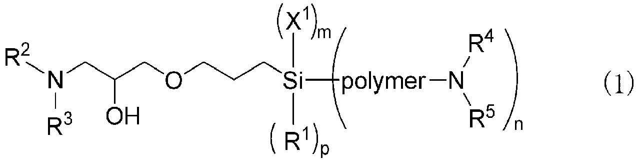 (wherein, in the formula (1), the "polymer" represents a polymer chain containing conjugated diene monomer units, X¹ represents a functional group selected from a hydrocarbyloxy group, halogen group, and hydroxyl group, R¹ represents a substituted or unsubstituted hydrocarbon group, R² and R³ respectively represent a substituted or unsubstituted hydrocarbon group, R² and R³ may bond with each other to form a ring structure together with the nitrogen atom to which they are bound, when forming the ring structure they may form a ring structure together with a hetero atom other than the nitrogen atom to which they are bound in addition to the nitrogen atom to which they are bound, R⁴ and R⁵ respectively represent a hydrogen atom, alkyl group, cycloalkyl group, aryl group, aralkyl group, a protecting group for amino group, or a group which produces a hydroxyl group when hydrolyzed, R⁴ and R⁵ may bond with each other to form a ring structure together with the nitrogen atom to which they are bound, when forming the ring structure they may form a ring structure together with a hetero atom other than the nitrogen atom to which they are bound in addition to the nitrogen atom to which they are bound, "n" is an integer of 1 to 3, "m" is an integer of 0 to 2, "p" is an integer of 0 to 2, and n+m+p = 3.)

In the formula (1), the polymer chain represented by the "polymer" is a polymer chain including conjugated diene monomer units. The conjugated diene compound used as the monomer for forming the conjugated diene monomer units is not particularly limited, but 1,3-butadiene, isoprene, 2,3-dimethyl-1,3-butadiene, 2-phenyl-1,3-butadiene, 1,3-pentadiene, 2-methyl-1,3-pentadiene, 1,3-hexadiene, 4,5-diethyl-1,3-octadiene, 3-butyl-1,3-octadiene, etc. may be mentioned. Among these as well, 1,3-butadiene and/or isoprene are preferable. These conjugated diene compounds may be used as single type alone or may be used as two types or more combined.

In the formula (1), the polymer chain represented by the "polymer" may be one composed of only conjugated diene monomer units, but may also be one further containing units composed of a compound which can copolymerize with conjugated diene compound. As the compound which can copolymerize with conjugated diene compound, for example, aromatic vinyl compounds such as styrene, methylstyrene, ethylstyrene, t-butylstyrene, α-methylstyrene, α-methyl-p-methylstyrene, chlorostyrene, bromostyrene, methoxystyrene, dimethylamino methylstyrene, dimethylamino ethylstyrene, diethylamino methylstyrene, diethylamino ethylstyrene, cyano ethylstyrene, and vinylnaphthalene; chain olefin compounds such as ethylene, propylene and 1-butene; cyclic olefin compounds such as cyclopentene and 2-norbornene; unconjugated diene compounds such as 1,5-hexadiene, 1,6-heptadiene, 1,7-octadiene, dicyclopentadiene, and 5-ethylidene-2-norbornene; (meth)acrylic acid esters such as methyl (meth)acrylate, ethyl (meth)acrylate and butyl (meth)acrylate; other (meth)acrylic acid derivatives such as (meth)acrylonitrile and (meth)acrylamide; etc. may be mentioned. Among these as well, aromatic vinyl compounds are preferable. Among these, styrene is particularly preferable. These compounds which can copolymerize with conjugated diene compound may be used as single type alone or as two or more types combined.

In the formula (1), in the polymer chain represented by the "polymer", the ratio of the conjugated diene monomer units to all monomer units forming the polymer chain is not particularly limited, but is usually 30 wt% or more, preferably 40 wt% or more, more preferably 50 wt% or more. Further, the content of the vinyl bonds (1,2-vinyl bond and 3,4-vinyl bond) at the conjugated diene monomer unit part of the polymer chain is not particularly limited, but is usually 1 to 90 mol%, preferably 5 to 85 mol%, more preferably 10 to 80 mol%. Further, in this polymer chain, the ratio of the aromatic vinyl monomer units to all monomer units forming the polymer chain is not particularly limited, but is usually 70 wt% or less, preferably 60 wt% or less, more preferably 50 wt% or less. Further, in this polymer chain, the ratio of the monomer units other than the conjugated diene monomer units and aromatic vinyl monomer units to all monomer units forming the polymer chain is not particularly limited, but is usually 20 wt% or less, preferably 10 wt% or less, more preferably 5 wt% or less.

In the formula (1), when the polymer chain represented by the "polymer" is comprised of two or more types of monomer units, the type of bond may, for example, be made various types of bonds such as a block type, taper type, and random type, but a random bond type is preferable. By making it a random type, the obtained cross-linked rubber becomes more excellent in low heat buildup. Further, in the polymer chain represented by the "polymer" in the formula (1), an end at the side bonded with a silicon atom represented by "Si" in the formula (1) may also be comprised of a polymer block comprised of substantially only isoprene units. When the end at the side bonded with a silicon atom is comprised of a polymer block comprised of substantially only isoprene units, the obtained conjugated diene polymer and silica become excellent in affinity and the obtained cross-linked rubber becomes more excellent in low heat buildup and wet grip.

Further, in the conjugated diene polymer of the present invention, the polymer chain containing conjugated diene monomer units represented by the "polymer" in the formula (1) is one at one end of which a group represented by the following formula (6) is bonded. 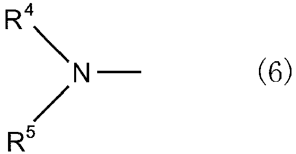 (wherein, in the formulas (1) and (6), R⁴ and R⁵ respectively represent a hydrogen atom, alkyl group, cycloalkyl group, aryl group, aralkyl group, a protecting group for amino group, or a group which produces a hydroxyl group when hydrolyzed, R⁴ and R⁵ may bond with each other to form a ring structure together with the nitrogen atom to which they are bound, when forming the ring structure they may form a ring structure together with a hetero atom other than the nitrogen atom to which they are bound in addition to the nitrogen atom to which they are bound.)

The alkyl group is not particularly limited, but preferably alkyl groups having 1 to 20 carbon atoms, more preferably alkyl groups having 1 to 10 carbon atoms. As the alkyl group, for example, a methyl group, ethyl group, n-propyl group, isopropyl group, n-butyl group, isobutyl group, sec-butyl group, tert-butyl group, n-pentyl group, n-hexyl group, n-heptyl group, n-octyl group, n-decyl group, etc. may be mentioned.

The cycloalkyl group is not particularly limited, but preferably cycloalkyl groups having 3 to 20 carbon atoms, more preferably cycloalkyl groups having 3 to 12 carbon atoms. As the cycloalkyl group, for example, a cyclopropyl group, cyclopentyl group, cyclohexyl group, cycloheptyl group, cyclooctyl group, cyclododecyl group, etc. may be mentioned.

The aryl group is not particularly limited, but preferably aryl groups having 6 to 12 carbon atoms, more preferably aryl groups having 6 to 10 carbon atoms. As the aryl group, for example, a phenyl group, 1-naphthyl group, 2-naphthyl group, etc. may be mentioned.

The aralkyl group is not particularly limited, but preferably aralkyl groups having 7 to 13 carbon atoms, more preferably aralkyl groups having 7 to 9 carbon atoms. As the aralkyl group, for example, a benzyl group, phenethyl group, etc. may be mentioned.

The protecting group for amino group is not particularly limited and may be any group capable of acting as a protecting group for amino group but, for example, alkylsilyl groups may be mentioned. As the alkylsilyl group, for example, trimethylsilyl group, triethylsilyl group, triphenylsilyl group, methyldiphenylsilyl group, ethylmethylphenylsilyl group, tert-butyldimethylsilyl group, etc. may be mentioned.

The group which produces a hydroxyl group when hydrolyzed is not particularly limited and may be any group which produces a hydroxyl group when hydrolyzed in the presence of an acid etc. but, for example, alkoxyalkyl groups and epoxy groups may be mentioned.

As the alkoxyalkyl group, for example, methoxymethyl group, ethoxymethyl group, ethoxyethyl group, propoxymethyl group, butoxymethyl group, butoxyethyl group, propoxyethyl group, etc. may be mentioned.

Further, as the group containing an epoxy group, groups represented by the following formula (7), etc. may be mentioned.

-Z-Y-E (7)

(wherein, in the formula (7), Z represents an alkylene group or alkylarylene group having 1 to 10 carbon atoms, Y represents a methylene group, sulfur atom or oxygen atom, and E represents a glycidyl group.)

Further, R⁴ and R⁵ may bond with each other to form a ring structure together with the nitrogen atom to which they are bound, and in such a case, specific examples of the structure formed by R⁴ and R⁵ together with the nitrogen atom to which they are bound include azetidine rings (R⁴ and R⁵ are propylene groups), pyrrolidine rings (R⁴ and R⁵ are butylene groups), piperidine rings (R⁴ and R⁵ are pentylene groups), hexamethyleneimine rings (R⁴ and R⁵ are hexylene groups), etc.

When R⁴ and R⁵ are bond with each other to form a ring structure together with the nitrogen atom to which they are bound, the ring structure is preferably a 4- to 8-member ring structure.

In the formula (1), "n" (that is, in the formula (1), the number of polymer chains having an amine structure at an end bonded with a silicon atom represented by "Si") is an integer of 1 to 3. The conjugated diene polymer of the present invention may be one comprising only polymer in which "n" in the formula (1) are specific numerical values or may be one comprising a mixture of polymer in which "n" in the formula (1) are different values.

In the formula (1), X¹ represents a functional group selected from a hydrocarbyloxy group, halogen group, and hydroxyl group. The hydrocarbyloxy group which may form the functional group represented by X¹ is not particularly limited, but an alkoxy group such as a methoxy group, ethoxy group, n-propoxy group, isopropoxy group, n-butoxy group, isobutoxy group, sec-butoxy group, and tert-butoxy group; an alkenyloxy group such as a vinyloxy group and allyloxy group; an aryloxy group such as a phenoxy group and naphthoxy group; an aralkyloxy group such as a benzyloxy group; etc. may be mentioned. Among these as well, an alkoxy group or aryloxy group is preferable, an alkoxy group is more preferable, and a methoxy group or ethoxy group is particularly preferable. Further, the halogen group which may form X¹ is not particularly limited, but a fluoro group, chloro group, bromo group, or iodo group may be mentioned. Among these as well, a chloro group is preferable. Further, X¹ may be a hydroxyl group. Such a hydroxyl group may be a hydroxyl group obtained by hydrolyzing a hydrocarbyloxy group or halogen group.

In the formula (1), "m" (that is, the number of functional groups represented by X¹ in the formula (1)) is an integer of 0 to 2, preferably 1 or 2. The conjugated diene polymer of the present invention may be one comprising only polymer in which "m" in the formula (1) are specific numerical values or may be one comprising a mixture of polymer in which "m" in the formula (1) are different values. Further, when "m" is 2, the two functional groups represented by X¹ in the formula (1) contained in one molecule of the conjugated diene polymer may be the same or may be different from each other.

In the formula (1), R¹ represents a substituted or unsubstituted hydrocarbon group. The hydrocarbon group which may form R¹ is not particularly limited, but an alkyl group such as a methyl group, ethyl group, n-propyl group, isopropyl group, n-butyl group, isobutyl group, sec-butyl group, and tert-butyl group; an alkenyl group such as a vinyl group and allyl group; an alkynyl group such as an ethynyl group and propynyl group; an aryl group such as a phenyl group and naphthyl group; an aralkyl group such as a benzyl group; etc. may be mentioned. Among these as well, an alkyl group or aryl group is preferable, and an alkyl group is more preferable. Further, the hydrocarbon group represented by R¹ may have a substituent other than a hydrocarbon group. The substituent is not particularly limited, but a carbonyl-group containing group such as a carboxyl group, acid anhydride group, hydrocarbylcarbonyl group, alkoxycarbonyl group, and acyloxy group or an epoxy group, oxy group, cyano group, amino group, halogen group, etc. may be mentioned.

In the formula (1), "p" (that is, the number of groups represented by R¹ in the formula (1)) is an integer of 0 to 2, preferably 0 or 1. The conjugated diene polymer of the present invention may be one comprising only polymer in which "p" in the formula (1) are specific numerical values or may be one comprising a mixture of polymer in which "p" in the formula (1) are different values. Further, when "p" is 2, the two groups represented by R¹ in formula (1) contained in one molecule of the conjugated diene polymer may be the same or may be different from each other.

In the formula (1), R² and R³ respectively represent a substituted or unsubstituted hydrocarbon group. R² and R³ may bond with each other to form a ring structure together with the nitrogen atom to which they are bound, when forming the ring structure they may form a ring structure together with a hetero atom other than the nitrogen atom to which they are bound in addition to the nitrogen atom to which they are bound. When R² and R³ do not bond with each other, the hydrocarbon group which may form R² and R³ are not particularly limited, but an alkyl group such as a methyl group, ethyl group, n-propyl group, isopropyl group, n-butyl group, isobutyl group, sec-butyl group, and tert-butyl group; an alkenyl group such as a vinyl group and allyl group; an alkynyl group such as an ethynyl group and propynyl group; an aryl group such as a phenyl group and naphthyl group; an aralkyl group such as a benzyl group; etc. may be mentioned. Among these as well, an alkyl group or aryl group is preferable, an alkyl group is more preferable, and a methyl group or ethyl group is particularly preferable. Further, when R² and R³ bond with each other to form a ring structure together with the nitrogen atom to which they are bound, the divalent hydrocarbon group comprised of R² and R³ bonded together is not particularly limited, but a n-butylene group (when forming a 1-pyrrolidone group together with the nitrogen atom to which they are bound in the formula (1)), n-pentylene group (when forming a 1-piperidine group), butadienylene group (when forming a 1-pyrrole group), etc. may be mentioned.

Further, the hydrocarbon group represented by R² and R³ may have a substituent other than the hydrocarbon group regardless of whether forming ring structures. The substituent is not particularly limited, but a carbonyl-group containing group such as a carboxyl group, acid anhydride group, hydrocarbylcarbonyl group, alkoxycarbonyl group, and acyloxy group or an epoxy group, oxy group, cyano group, amino group, halogen group, etc. may be mentioned. Furthermore, when the R² and R³ bond with each other to form a ring structure together with the nitrogen bond to which they are bound, as the atom forming the ring structure, the carbon atom and hetero atom other than the nitrogen atom to which they are bound in the formula (1) may be included. As examples of the hetero atom, nitrogen atom and oxygen atom may be mentioned.

In the formula (1), n+m+p = 3. That is, in the formula (1), the sum of "n", "m", and "p" is 3.

As the conjugated diene polymer of the present invention, as particularly preferable one, one where the hydrocarbon groups represented by R² and R³ bond with each other to form piperazine ring structures together with the nitrogen atom to which they are bound may be mentioned. More specifically, the conjugated diene polymer of the present invention is particularly preferably a conjugated diene polymer represented by the following formula (2). By the conjugated diene polymer of the present invention having such a structure, the obtained cross-linked rubber can be made particularly excellent in low heat buildup. 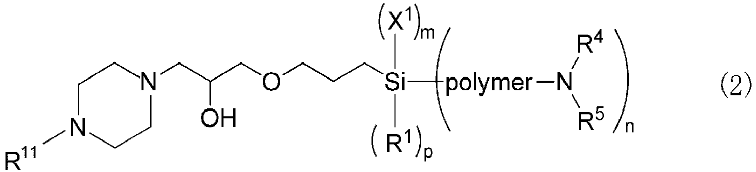 (wherein, in the formula (2), the "polymer", X¹, R¹, R⁴, R⁵, n, m, and p all represent the same as those defined in the formula (1), R¹¹ represents a hydrocarbon, and n+m+p = 3.)

In the formula (2), R¹¹ represents a hydrocarbon group. The hydrocarbon group which may form R¹¹ is not particularly limited, but an alkyl group such as a methyl group, ethyl group, n-propyl group, isopropyl group, n-butyl group, isobutyl group, sec-butyl group, and tert-butyl group; an alkenyl group such as a vinyl group and allyl group; an alkynyl group such as an ethynyl group and propynyl group; an aryl group such as a phenyl group and naphthyl group; an aralkyl group such as a benzyl group; etc. may be mentioned. Among these as well, an alkyl group or aryl group is preferable, an alkyl group is more preferable, and a methyl group is particularly preferable.

The weight average molecular weight (Mw) of the conjugated diene polymer of the present invention is not particularly limited, but the value measured by gel permeation chromatography converted to polystyrene is normally 1,000 to 3,000,000, preferably 10,000 to 2,000,000, more preferably 100,000 to 1,500,000 in range. By making the weight average molecular weight of the conjugated diene polymer the above range, the processability and mechanical strength of the conjugated diene polymer become better balanced.

Further, the molecular weight distribution represented by the ratio (Mw/Mn) of the weight average molecular weight (Mw) and the number average molecular weight (Mn) of the conjugated diene polymer of the present invention is not particularly limited, but is preferably 1.0 to 5.0, more preferably 1.0 to 3.0. By making the molecular weight distribution of the conjugated diene polymer the above range, the obtained cross-linked rubber becomes excellent in low heat buildup.

The conjugated diene polymer of the present invention can be suitably used for various applications by adding compounding ingredient such as a filler and cross-linking agent. Particularly, when adding silica as a filler, a rubber composition able to give cross-linked rubber excellent in low heat buildup and wet grip is given.

The method of production of such a conjugated diene polymer of the present invention is not particularly limited so long as the targeted structure is obtained, but the method of production of the conjugated diene polymer of the present invention explained next is suitable. That is, the method of production of the conjugated diene polymer of the present invention comprises a step of polymerizing a monomer containing a conjugated diene compound in an inert solvent using an organic alkali metal amide compound as a polymerization initiator so as to obtain a conjugated diene polymer chain having an active end and a step of reacting a compound represented by the formula (3) to be described later with the active end of the conjugated diene polymer chain having an active end.

One of the two essential steps in the method of production of the conjugated diene polymer of the present invention is a step of polymerizing a monomer containing a conjugated diene compound in an inert solvent using an organic alkali metal amide compound as a polymerization initiator so as to obtain a conjugated diene polymer chain having an active end.

As the conjugated diene compound used as the monomer to obtain a conjugated diene polymer having an active end in this step, the same as those illustrated as conjugated diene compound used for forming the polymer chain containing conjugated diene monomer units in the conjugated diene polymer of the present invention explained above may be illustrated.

Further, as the monomer, an aromatic vinyl compound may be used together with the conjugated diene compound. As the aromatic vinyl compound used as a monomer, the same as those illustrated as aromatic vinyl compounds used for forming the polymer chain containing conjugated diene monomer units in the conjugated diene polymer of the present invention explained above may be illustrated. Furthermore, as the monomer, along with the conjugated diene compound, it is possible to use a compound able to copolymerize with the conjugated diene compound other than an aromatic vinyl compound. As the compound able to copolymerize with the conjugated diene compound other than the aromatic vinyl compound used as a monomer, the same as those illustrated as compounds able to copolymerize with the conjugated diene compound and able to be used for forming the polymer chain containing conjugated diene monomer units in the conjugated diene polymer of the present invention explained above, excluding the aromatic vinyl compound, may be illustrated.

The ratio of the conjugated diene monomer units and the ratio of the aromatic vinyl monomer units to all monomer units forming the conjugated diene polymer chain having an active end to be obtained as well as the content of the vinyl bonds at the conjugated diene monomer unit part of the conjugated diene polymer chain having an active end to be obtained are the same ratio as the polymer chain containing conjugated diene monomer units in the conjugated diene polymer of the present invention described earlier. Further, the type of bond is the same as the polymer chain containing conjugated diene monomer units in the conjugated diene polymer of the present invention illustrated earlier.

The inert solvent used for the polymerization is not particularly limited so long as a solvent usually used in solution polymerization and not detracting from the polymerization reaction. As specific examples of the inert solvent, chain aliphatic hydrocarbons such as butane, pentane, hexane, and heptane; alicyclic hydrocarbons such as cyclopentane and cyclohexane; aromatic hydrocarbons such as benzene, toluene, and xylene; etc. may be mentioned. These inert solvents may be used as single type alone or as two or more types combined. The amount of use of the inert solvent is not particularly limited, but an amount in which the monomer concentration becomes, for example, 1 to 50 wt%, preferably 10 to 40 wt%.

Further, for the polymerization, an organic alkali metal amide compound is used as the polymerization initiator. According to the method of production of the present invention, when an organic alkali metal amide compound is used as the polymerization initiator, an amine structure forming an organic alkali metal amide compound remains in the state as bonded to the polymerization initiation end of the polymer chain. Accordingly, when an organic alkali metal amide compound is used as a polymerization initiator, the structure represented by the formula (6) is preferably introduced to an end of the polymer chain forming the conjugated diene polymer of the present invention (that is, the polymer chain represented by the "polymer" in the formula (1)).

As the organic alkali metal amide compound, for example, one obtained by reacting a secondary amine compound with an organic alkali metal compound, etc. may be mentioned. Among these as well, in the method of production of the present invention, the compound represented by the following formula (4) can be preferably used. 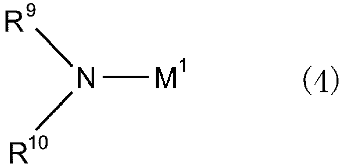 (wherein, in the formula (4), M¹ represents an alkali metal atom, R⁹ and R¹⁰ respectively represent an alkyl group, cycloalkyl group, aryl group, aralkyl group, a protecting group for amino group, or a group which produces a hydroxyl group when hydrolyzed, R⁹ and R¹⁰ may bond with each other to form a ring structure together with the nitrogen atom to which they are bound, when forming the ring structure they may form a ring structure together with a hetero atom other than the nitrogen atom to which they are bound in addition to the nitrogen atom to which they are bound.)

The alkyl group, cycloalkyl group, aryl group, aralkyl group, a protecting group for amino group, or a group which produces a hydroxyl group when hydrolyzed which may form R⁹ and R¹⁰ is the same as R⁴ and R⁵ in the formula (1). Further, when R⁹ and R¹⁰ bond with each other to form a ring structure together with the nitrogen atom to which they are bound, they are the same as R⁴ and R⁵ in the formula (1).

Note that when R⁹, and/or R¹⁰ are protecting groups for amino group, removal of the protecting group for amino group enables the introduction of the structure where R⁴, and/or R⁵ in the formula (1) are hydrogen atoms.

Further, in the formula (4), M¹ is an alkali metal atom, and as the alkali metal atom, a lithium atom, sodium atom, potassium atom, etc. may be mentioned, but among these as well a lithium atom is preferable from the viewpoint of polymerization activity.

The amount of use of the organic alkali metal amide compound as the polymerization initiator may be determined in accordance with the targeted molecular weight of the conjugated diene polymer chain, but is usually 1 to 50 mmoles per 1000 g of the monomer, preferably 1.5 to 20 mmoles, more preferably 2 to 15 mmoles in range.

Further, the method of addition of an organic alkali metal amide compound as the polymerization initiator to the polymerization system is not particularly limited, but a method may be employed where a secondary amine compound is reacted with an organic alkali metal compound in advance to obtain an organic alkali metal amide compound, which is mixed with a monomer containing the conjugated diene compound to proceed the polymerization reaction. Alternatively, a method may be employed where an organic alkali metal compound and a secondary amine compound are separately added to the polymerization system, mixed with a monomer containing the conjugated diene compound so as to produce an organic alkali metal amide compound in the polymerization system, thereby proceeding the polymerization reaction.

Note that, in this case, the amount of use of the secondary amine compound may be determined in accordance with the targeted addition amount of the organic alkali metal amide compound, but is usually 0.01 to 1.5 mmoles per mmole of the organic alkali metal compound, preferably 0.1 to 1.2 mmoles, more preferably 0.5 to 1.0 mmoles in range.

Further, as the organic alkali metal compound used in this case, for example, organic monolithium compounds such as n-butyllithium, sec-butyllithium, t-butyllithium, hexyllithium, phenyllithium, and stilbenelithium; organic polyvalent lithium compounds such as dilithiomethane, 1,4-dilithiobutane, 1,4-dilithio-2-ethylcyclohexane, 1,3,5-trilithiobenzene, and 1,3,5-tris(lithiomethyl)benzene; organic sodium compounds such as sodium naphthalene; organic potassium compounds such as potassium naphthalene; etc. may be mentioned. Further, as the secondary amine compound, a compound corresponding to an organic alkali metal amide compound may be used and dibutylamine, dihexylamine, dibenzylamine, pyrrolidine, piperidine, hexamethyleneimine, heptamethyleneimine, etc. may be mentioned.

The polymerization temperature is usually -80 to +150°C, preferably 0 to 100°C, more preferably 30 to 90°C in range. As the polymerization process, a batch process, continuous process, or any other process can be employed, but when copolymerizing a conjugated diene compound and aromatic vinyl compound, the batch process is preferable in the point of facilitating control of the randomness of bonds between the conjugated diene monomer units and aromatic vinyl monomer units. Note that, as explained above, in the polymer chain represented by the "polymer" in the formula (1), when an end at the side bonded with a silicon atom represented by "Si" in the formula (1) is formed by a polymer block comprised of substantially only isoprene units, the polymerization process may be made the batch process and, first, the monomer for forming parts other than the polymer block comprised of only isoprene units may be polymerized, then a monomer comprised of only isoprene may be added to the polymerization reaction system for polymerization.

Further, in polymerization of a monomer containing a conjugated diene compound, to adjust the vinyl bond content in the conjugated diene monomer units in the obtained conjugated diene polymer chain, it is preferable to add a polar compound to the inert organic solvent. As the polar compound, for example, ether compounds such as dibutyl ether, tetrahydrofuran, 2,2-di(tetrahydrofuryl)propane; tertiary amines such as tetramethylethylenediamine; alkali metal alkoxides; phosphine compounds; etc. may be mentioned. Among these as well, an ether compound and a tertiary amine are preferable, a tertiary amine is more preferable, and tetramethylethylenediamine is particularly preferable. These polar compounds may be used as single type alone or as two or more types combined. The amount of use of the polar compound may be determined according to the targeted vinyl bond content and is preferably 0.001 to 100 moles with respect to 1 mole of the polymerization initiator, more preferably 0.01 to 10 moles. If the amount of use of the polar compound is in this range, adjustment of the vinyl bond content in the conjugated diene monomer units is easy and the problem of deactivation of the polymerization initiator hardly ever arises.

According to the above such process, it is possible to obtain in an inert solvent a conjugated diene polymer chain having an end to which the group represented by the formula (6) is introduced and an active end at the other end. The remaining one of the two essential steps in the method of production of the conjugated diene polymer of the present invention is the step of making the compound represented by the following formula (3) react with an active end of this conjugated diene polymer chain having an end to which the group represented by the formula (6) is introduced and an active end at the other end (hereinafter, as necessary, referred to as "the conjugated diene polymer chain having the group represented by the formula (6) and an active end"). 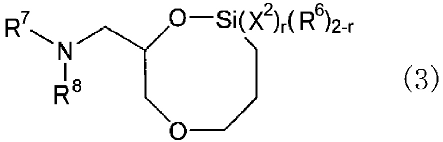 (wherein, in the formula (3), X² represents a functional group selected from a hydrocarbyloxy group, halogen group, and hydroxyl group, R⁶ represents a substituted or unsubstituted hydrocarbon group, R⁷ and R⁸ respectively represent a substituted or unsubstituted hydrocarbon group, R⁷ and R⁸ may bond with each other to form a ring structure together with the nitrogen atom to which they are bound, when forming the ring structure they may form a ring structure together with a hetero atom other than the nitrogen atom to which they are bound in addition to the nitrogen atom to which they are bound, "r" is an integer of 0 to 2.)

In the formula (3), X² represents a functional group selected from a hydrocarbyloxy group, halogen group, and hydroxyl group. As specific examples of the hydrocarbyloxy group, halogen group, and hydroxyl group which may form the functional group represented by X², the same as those illustrated as X¹ in the formula (1) may be mentioned.

In the formula (3), "r" (that is, the number of groups represented by X² in the formula (3)) is an integer of 0 to 2. If the "r" in the formula (3) is 2, the two groups represented by X² contained in one molecule of the compound represented by the formula (3) may be the same or may be different from each other.

In the formula (3), R⁶ represents a substituted or unsubstituted hydrocarbon group. As specific examples of the hydrocarbon group in the substituted or unsubstituted hydrocarbon group represented by R⁶ and its substituent, the same as those illustrated as R¹ in the formula (1) may be mentioned. If "r" in the formula (3) is 0, the two groups represented by R⁶ contained in one molecule of the compound represented by the formula (3) may be the same or may be different from each other.

In the formula (3), R⁷ and R⁸ respectively represent a substituted or unsubstituted hydrocarbon group, R⁷ and R⁸ may bond with each other to form a ring structure together with the nitrogen atom to which they are bound, when forming the structure they may form a ring structure together with a hetero atom other than the nitrogen atom to which they are bound in addition to the nitrogen atom to which they are bound. As specific examples of the hydrocarbon group in the substituted or unsubstituted hydrocarbon group represented by R⁷ and R⁸ and its substituent, the same as those illustrated as R² and R³ in the formula (1) may be mentioned.

Note that when R⁷ and R⁸ bond with each other to form a ring structure together with the nitrogen atom to which they are bound, the ring structure is preferably a 4- to 8-member ring structure.

To obtain the conjugated diene polymers represented by the formula (2) particularly preferable as the conjugated diene polymer of the present invention, it is sufficient to use a compound represented by the following formula (5) as the compound represented by the formula (3). 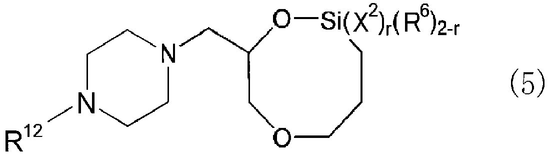 (wherein, in the formula (5), X², R⁶ and r represent the same as those defined in the formula (3), R¹² represents a hydrocarbon group.)

In the formula (5), R¹² represents a hydrocarbon group. The hydrocarbon group which may form R¹² is not particularly limited, but an alkyl group such as a methyl group, ethyl group, n-propyl group, isopropyl group, n-butyl group, isobutyl group, sec-butyl group, and tert-butyl group; an alkenyl group such as a vinyl group and allyl group; an alkynyl group such as an ethynyl group and propynyl group; an aryl group such as a phenyl group and naphthyl group; an aralkyl group such as a benzyl group; etc. may be mentioned. Among these as well, an alkyl group or aryl group is preferable, an alkyl group is more preferable, and a methyl group is particularly preferable.

As specific examples of the compound represented by the formula (5), 2,2-dimethoxy-8-(4-methylpiperazinyl)methyl-1,6-dioxa-2-silacyclooctane, 2,2-diethoxy-8-(4-methylpiperazinyl)methyl-1,6-dioxa-2-silacyclooctane, 2,2-dimethoxy-8-(N,N-diethylamino)methyl-1,6-dioxa-2-silacyclooctane, 2-methoxy-2-methyl-8-(4-methylpiperazinyl)methyl-1,6-dioxa-2-silacyclooctane etc. may be mentioned. The compound represented by the formula (5) may be used as single type alone or as two or more types combined.

In the method of production of the conjugated diene polymer of the present invention, the amount of use of the compound represented by the formula (5) is not particularly limited, but as the amount of the compound represented by the formula (5) with respect to 1 mole of active end of the conjugated diene polymer chain having an active end, 0.5 to 10.0 moles is preferable, 0.7 to 5.0 moles is more preferable, and 1.0 to 2.0 moles is particularly preferable. By using the compound represented by the formula (5) in such an amount, the obtained conjugated diene polymer can become one giving cross-linked rubber particularly excellent in low heat buildup.

Note that, usually, the compound represented by the formula (3) is considered to proceed in reaction in the following way when reacted with an active end of a conjugated diene polymer chain having the group represented by the formula (6) and an active end. That is, first, as a first stage reaction, the oxygen-silicon bond in the 8-member ring structure in the compound represented by the formula (3) is cleaved, the silicon atom forms a new bond with an active end of the conjugated diene polymer chain, and the oxygen atom forms a salt structure with the counter ions of the active end (note that, the salt structure will react with the proton derived from the polymerization reaction terminator etc. at the time of stopping the polymerization reaction to form a hydroxyl group). Furthermore, when the compound represented by the formula (3) has a hydrocarbyloxy group (when "r" in the formula (3) is 1 or 2), the hydrocarbyloxy group and an active end of the conjugated diene polymer chain react and the hydrocarbyloxy group leaves from the silicon atom to which it was bound, and furthermore, a bond is formed between the silicon atom and the active end of the conjugated diene polymer chain.

The method of making the compound represented by the formula (3) react with the conjugated diene polymer chain having the group represented by the formula (6) and an active end is not particularly limited, but the method of mixing these in a solvent able to dissolve the same etc. may be mentioned. As the solvent used at this time, the same as those illustrated as inert solvents used in the above polymerization etc. can be used. Further, at this time, the method of adding the compound represented by the formula (3) to the polymerization solution used for the polymerization for obtaining the conjugated diene polymer chain having the group represented by the formula (6) and an active end is simple and preferable. Further, at this time, the compound represented by the formula (3) is preferably dissolved in an inert solvent and then added to the polymerization system. The solution concentration is preferably 1 to 50 wt% in range. The reaction temperature is not particularly limited, but is usually 0 to 120°C. The reaction time is also not particularly limited, but is usually 1 minute to 1 hour.

The timing for adding the compound represented by the formula (3) to the solution containing the conjugated diene polymer chain having the group represented by the formula (6) and an active end is not particularly limited, but it is preferable to add the compound represented by the formula (3) to this solution in the state where the polymerization reaction is not completed and the solution containing the conjugated diene polymer chain having the group represented by the formula (6) and an active end also contains a monomer, more specifically, in the state where the solution containing the conjugated diene polymer chain having the group represented by the formula (6) and an active end contains 100 ppm or more of monomer, more preferably 300 to 50,000 ppm of monomer. By adding the compound represented by the formula (3) in this way, it becomes possible to suppress secondary reactions between the conjugated diene polymer chain having the group represented by the formula (6) and an active end and impurities etc. contained in the polymerization system and to control the reaction well.

Note that, when in the state before making the compound represented by the formula (3) react with the conjugated diene polymer chain having the group represented by the formula (6) and an active end or when in the state where the conjugated diene polymer chain having the group represented by the formula (6) and an active end remain after the reaction, a conventionally normally used coupling agent or modifying agent etc. may be added to the polymerization system for coupling or modificating part of the active end of the conjugated diene polymer chain having the group represented by the formula (6) and an active end within a range not impairing the effect of the present invention.

Further, in the method of production of the present invention, a part of the active ends of the conjugated diene polymer chains having the group represented by the formula (6) and an active end may be reacted with a coupling agent. As the coupling agent, a tin halide, silicon halide, or a compound represented by the following formula (8), etc. may be mentioned. 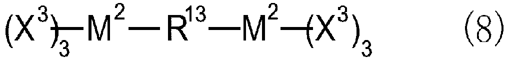 (wherein, in the formula (8), R¹³ represents a substituted or unsubstituted alkyl chain, X³ represents a halogen group, and M² represents a silicon atom or a tin atom.)

As the tin halide, tin tetrachloride, triphenylmonochlorotin, etc. may be mentioned, but tin tetrachloride is preferable. Further, as the silicon halide, silicon tetrachloride, hexachlorodisilane, triphenoxychlorosilane, methyltriphenoxysilane, diphenoxydichlorosilane, etc. may be mentioned, while silicon tetrachloride is preferable.

Further, in the formula (8), R¹³ represents a substituted or unsubstituted alkylene group. The alkylene group which may form R¹³ is not particularly limited, but a methylene group, 1,2-ethylene group, 1,3-propylene group, 1,4-butylene group, 1,5-pentylene group, 1,6-hexylene group, 4-methyl-2,2-pentylene group, 2,3-dimethyl-2,3-butylene group, etc. may be mentioned. Among these as well, a 1,2-ethylene group and 1,6-hexylene group are preferable. Further, the halogen group which may form X³ is not particularly limited, but a fluoro group, chloro group, bromo group, and iodo group may be mentioned. Among these as well, a chloro group is preferable. Furthermore, M² is a silicon atom or tin atom, but a silicon atom is preferable.

Further, as specific examples of the compound represented by the formula (8), bis(trichlorosilyl)methane, 1,2-bis(trichlorosilyl)ethane, 1,3-bis(trichlorosilyl)propane, 1,4-bis(trichlorosilyl)butane, 1,5-bis(trichlorosilyl)pentane, 1,6-bis(trichlorosilyl)hexane, etc. may be mentioned.

In the method of production of the conjugated diene polymer of the present invention, the amount of use of tin halide, silicon halide, or the compound represented by the formula (8) is not particularly limited, but as the amount with respect to 1 mole of the active end of the conjugated diene polymer chain having the group represented by the formula (6) and an active end, 0.001 to 0.2 mole is preferable, 0.005 to 0.1 mole is more preferable, and 0.01 to 0.05 mole is particularly preferable. By using tin halide, silicon halide, or the compound represented by the formula (8) in such an amount, it is possible to improve the shape stability of the obtained conjugated diene polymer more.

If unreacted active end remains after making the compound represented by the formula (3) and, if desired, a coupling agent or other modifying agent react with the conjugated diene polymer chain having the group represented by the formula (6) and an active end, an alcohol such as methanol, ethanol, and isopropanol or water as a polymerization terminator is preferably added to the polymerization solution to deactivate the unreacted active end.

To the solution of the thus obtained conjugated diene polymer, an antiaging agent such as a phenol-based stabilizing agent, phosphorus-based stabilizing agent, and sulfur-based stabilizing agent may be added, if desired. The amount of addition of the antiaging agent may be suitably determined in accordance with the type etc. Furthermore, if desired, an oil extender may be mixed in to obtain oil extended rubber. As the oil extender, for example, a paraffin-based, aromatic-based, and naphthene-based oil-based softening agent, plant-based softening agent, fatty acid, etc. may be mentioned. When using the oil-based softening agent, the content of the polycyclic aromatic compound extracted by the method of IP346 (test method of THE INSTITUTE PETROLEUM of the U.K.) is preferably less than 3%. When using an oil extender, the amount of use is usually 5 to 100 parts by weight with respect to 100 parts by weight of the conjugated diene polymer.

Further, the thus obtained conjugated diene polymer can be obtained as a solid type conjugated diene polymer by, for example, steam stripping to remove the solvent and thereby separate the polymer from the reaction mixture. Note that when the conjugated diene polymer obtained by the polymerization reaction has a hydrocarbyloxy group or halogen group as the group represented by X¹ in the formula (1), at least part of these groups, at the time of steam stripping this conjugated diene polymer, may be hydrolyzed and produce a hydroxyl group, but a conjugated diene polymer having a hydroxyl group (silanol group) as the group represented by X¹ produced in this way can also be used as the conjugated diene polymer of the present invention.

The conjugated diene polymer of the present invention is not particularly limited in coupling rate, but is preferably 10 wt% or more, more preferably 15 wt% or more, particularly preferably 20 wt% or more, further preferably 80 wt% or less, more preferably 75 wt% or less, particularly preferably 70 wt% or less. When a coupling rate is within the above range, a cross-linked product obtained from the conjugated diene polymer can be made more excellent in low heat buildup and wet grip. Note that the coupling rate is the weight percentage of the polymer molecules having a molecular weight of 1.8 times or more of the peak top molecular weight of the conjugated diene polymer chain having the group represented by the formula (6) and an active end to the total amount of the finally obtained conjugated diene polymer. The molecular weight at this time is measured by finding the molecular weight converted to polystyrene by gel permeation chromatography.

The rubber composition of the present invention is a rubber composition containing, for example, 100 parts by weight of rubber ingredients containing thus the obtained conjugated diene polymer of the present invention and 10 to 200 parts by weight of silica.

As the silica used in the present invention, for example, dry white carbon, wet white carbon, colloidal silica, precipitated silica, etc. may be mentioned. Among these as well, wet white carbon mainly comprised of hydrous silicic acid is preferable. Further, a carbon-silica dual phase filler comprised of carbon black on the surface of which silica is carried may be used. These silicas can be used respectively alone or as two or more types combined. The nitrogen adsorption specific surface area of the silica which is used (measured by BET method based on ASTM D3037-81) is preferably 50 to 300 m²/g, more preferably 80 to 220 m²/g, particularly preferably 100 to 170 m²/g. Further, the pH of the silica is preferably 5 to 10.

The amount of silica in the rubber composition of the present invention is 10 to 200 parts by weight with respect to 100 parts by weight of the rubber ingredients in the rubber composition, preferably 30 to 150 parts by weight, more preferably 50 to 100 parts by weight. By making the amount of the silica this range, the processability of the rubber composition becomes excellent and the obtained cross-linked rubber becomes more excellent in wet grip and low heat buildup.

The rubber composition of the present invention may further contain a silane coupling agent from the viewpoint of further improvement of low heat buildup. As the silane coupling agent, for example, vinyltriethoxysilane, β-(3,4-epoxycyclohexyl)ethyltrimethoxysilane, N-(β-aminoethyl)-γ-aminopropyltrimethoxysilane, 3-octanoylthio-1-propyl-triethoxysilane, bis(3-(triethoxysilyl)propyl) disulfide, bis(3-(triethoxysilyl)propyl) tetrasulfide, γ-trimethoxysilylpropyldimethylthiocarbamyl tetrasulfide, γ-trimethoxysilylpropylbenzothiazyl tetrasulfide, etc. may be mentioned. These silane coupling agents can be used respectively alone or as two or more types combined. The amount of the silane coupling agent is preferably 0.1 to 30 parts by weight with respect to 100 parts by weight of the silica in the rubber composition, more preferably 1 to 15 parts by weight.

Further, the rubber composition of the present invention may further contain carbon black such as furnace black, acetylene black, thermal black, channel black, and graphite. Among these as well, furnace black is preferable. These carbon blacks can be used respectively alone or as two or more types combined. The amount of the carbon black is usually 120 parts by weight or less with respect to 100 parts by weight of the rubber ingredients in the rubber composition.

The method of adding silica to the rubber ingredients including the conjugated diene polymer of the present invention is not particularly limited, but the method of adding it to and kneading it with the solid rubber ingredients (dry kneading method), the method of adding it to a solution of the rubber ingredients and coagulating and drying them (wet kneading method), etc. may be applied.

Further, the rubber composition of the present invention preferably further contains a cross-linking agent. As the cross-linking agent, for example, a sulfur-containing compound such as sulfur and halogenated sulfur, an organic peroxide, quinone dioximes, organic polyvalent amine compound, an alkylphenol resin having a methylol group, etc. may be mentioned. Among these as well, sulfur is preferably used. The amount of the cross-linking agent is preferably 0.1 to 15 parts by weight with respect to 100 parts by weight of the rubber ingredients in the rubber composition, more preferably 0.5 to 5 parts by weight, particularly preferably 1 to 4 parts by weight.

Further, the rubber composition of the present invention may have mixed with it, other than the above ingredients, in accordance with ordinary methods, compounding ingredients such as a cross-linking accelerator, cross-linking activator, antiaging agent, filler (except the above-mentioned silica and carbon black), activating agent, process oil, plasticizer, slip agent, and tackifier in respectively required amounts.

When using sulfur or a sulfur-containing compound as a cross-linking agent, jointly using a cross-linking accelerator and cross-linking activator is preferable. As the cross-linking accelerator, for example, a sulfenamide-based cross-linking accelerator; guanidine-based cross-linking accelerator; thiourea-based cross-linking accelerator; thiazole-based cross-linking accelerator; thiuram-based cross-linking accelerator; dithiocarbamic acid-based cross-linking accelerator; xanthic acid-based cross-linking accelerator; etc. may be mentioned. Among these as well, one including a sulfenamide-based cross-linking accelerator is preferable. These cross-linking accelerators may be used respectively alone or as two or more types combined. The amount of cross-linking accelerator is preferably 0.1 to 15 parts by weight with respect to 100 parts by weight of the rubber ingredients in the rubber composition, more preferably 0.5 to 5 parts by weight, particularly preferably 1 to 4 parts by weight.

As the cross-linking activator, for example, higher fatty acids such as stearic acid; zinc oxide; etc. may be mentioned. These cross-linking activators may be used respectively alone or as two types or more combined. The amount of the cross-linking activator is preferably 0.05 to 20 parts by weight with respect to 100 parts by weight of the rubber ingredients in the rubber composition, particularly preferably 0.5 to 15 parts by weight.

Further, the rubber composition of the present invention may contain other rubber besides the conjugated diene polymer of the present invention. As the other rubber, for example, other rubber than the above-mentioned conjugated diene rubber such as natural rubber, polyisoprene rubber, emulsion polymerized styrene-butadiene copolymer rubber, solution polymerized styrene-butadiene copolymer rubber, polybutadiene rubber (high cis-BR or low cis BR, further, polybutadiene rubber containing crystal fibers made of 1,2-polybutadiene polymer also possible), styrene-isoprene copolymer rubber, butadiene-isoprene copolymer rubber, styrene-isoprene-butadiene copolymer rubber, acrylonitrile-butadiene copolymer rubber, and acrylonitrile-styrene-butadiene copolymer rubber may be mentioned. Among these as well, natural rubber, polyisoprene rubber, polybutadiene rubber, and solution polymerized styrene-butadiene copolymer rubber are preferable. These rubbers can be used respectively alone or as two or more types combined.

In the rubber composition of the present invention, the conjugated diene polymer of the present invention preferably accounts for 10 to 100 wt% of the rubber ingredients in the rubber composition, particularly preferably accounts for 50 to 100 wt%. In such a case, by the conjugated diene polymer of the present invention being included in the rubber ingredients, cross-linked rubber more excellent in low heat buildup and wet grip can be obtained.

To obtain the rubber composition of the present invention, it is sufficient to knead the ingredients according to an ordinary method. For example, it is possible to knead the ingredients other than thermally unstable ingredients such as cross-linking agent and cross-linking accelerator with the rubber ingredients, then mix thermally unstable ingredients such as cross-linking agent and cross-linking accelerator with the kneaded material to obtain the target rubber composition. The kneading temperature of the ingredients other than the thermally unstable ingredients and the rubber ingredients is preferably 80 to 200°C, more preferably 120 to 180°C, while the kneading time is preferably 30 seconds to 30 minutes. Further, the kneaded material and thermally unstable ingredients are mixed after cooling them down to usually 100°C or less, preferably 80°C or less.

The cross-linked rubber of the present invention is obtained by cross-linking the rubber composition of the present invention such as explained above. The cross-linked rubber of the present invention may be produced using the rubber composition of the present invention, for example, shaping it by a forming machine corresponding to the desired shape, for example, an extruder, injection molding machine, press, rolls, etc., and heating it for a cross-linking reaction to fix the shape as a cross-linked product. In this case, the product may be cross-linked after shaping it in advance or may be cross-linked simultaneously with shaping. The shaping temperature is usually 10 to 200°C, preferably 25 to 120°C. The cross-linking temperature is usually 100 to 200°C, preferably 130 to 190°C, while the cross-linking time is usually 1 minute to 24 hours, preferably 2 minutes to 12 hours, particularly preferably 3 minutes to 6 hours.

Further, depending on the shape, size, etc. of cross-linked rubber, sometimes even if the surface is cross-linked, the inside is not sufficiently cross-linked, so the cross-linked rubber may be further heated for secondary cross-linking.

As the heating method for cross-linking the rubber composition, it is sufficient to suitably select press heating, steam heating, oven heating, hot air heating, and other general methods used for cross-linking rubber.

For example, the cross-linked rubber of the present invention obtained in the above way is obtained using the conjugated diene polymer of the present invention, so is excellent in low heat buildup and wet grip. The cross-linked rubber of the present invention, making use of these characteristics, can for example, be used for materials for parts of tires such as cap treads, base treads, carcasses, side walls, and bead parts; materials of industrial products such as hoses, belts, mats, and vibration absorbing rubber; agents for improving the impact resistance of resins; resin film buffer agents; shoe soles; rubber shoes; golf balls; toys; and other various applications. In particular, the cross-linked rubber of the present invention is excellent in low heat buildup and wet grip, so can be suitably used as the material for a tire, particularly as the material for a low fuel consumption tire. It is optimal for a tread application.

### EXAMPLES

Below, examples, comparative examples and a reference example will be given to more specifically explain the present invention. Note that, in the examples, "parts" and "%" are based on weight unless particularly represented otherwise. The various measurements and evaluation were performed by the following methods.

### [Weight Average Molecular Weight, Molecular Weight Distribution, Coupling Rate]

For the weight average molecular weight (Mw), molecular weight distribution (Mw/Mn), and coupling rate, gel permeation chromatography was carried out to obtain a chart of molecular weights converted to polystyrene, based on which they were determined. The specific measurement conditions of gel permeation chromatography were as follows:
Measurement device: High performance liquid chromatograph (made by Tosoh, product name "HLC-8220")
Column: made by Tosoh, product name "GMH-HR-H", two connected in series.
Detector: Differential refractometer
Eluent: tetrahydrofuran
Column temperature: 40°C

For the coupling rate, in an elution curve obtained by the gel permeation chromatography under the above conditions, the area ratio of peak parts having a peak top molecular weight of 1.8 times or more of the peak top molecular weight shown by a peak of the smallest molecular weight to the total elution area was made the value of the coupling rate of the conjugated diene polymer.

### [Micro Structure]

The measurement was carried out by ¹H-NMR.
Measurement device: Made by JEOL, product name "JNM-ECA-400WB"
Measurement solvent: Deuterated chloroform

### [Wet Grip of Cross-Linked Rubber]

The wet grip was evaluated by measuring a test piece of a length 50 mm, width 12.7 mm, and thickness 2 mm for the value of tanδ at 0°C using an ARES made by Rheometrics under conditions of a dynamic stress of 0.5% and 10Hz. The value of this tanδ was shown indexed to the measured value of Reference Example 1 as 100. The larger this index, the better the wet grip.

### [Low Heat Buildup of Cross-Linked Rubber]

The low heat buildup was evaluated by measuring a test piece of a length 50 mm, width 12.7 mm, and thickness 2 mm for the value of tanδ at 60°C using an ARES made by Rheometrics under conditions of a dynamic stress of 2.5% and 10Hz. The value of this tanδ was shown indexed to the measured value of Reference Example 1 as 100. The smaller this index, the better the low heat buildup.

### [Example 1]

In a nitrogen atmosphere, an autoclave with a stirrer was charged with 800 g of cyclohexane, 1.90 mmol of tetramethylethylenediamine, 0.95 mmol of di-N-hexylamine, 94.8 g of 1,3-butadiene, and 25.2 g of styrene, and then 1.23 mmol of n-butyllithium was added and polymerization started at 60°C. The polymerization reaction was continued for 60 minutes, and when the polymerization conversion rate was confirmed to have ranged from 95% to 100%, 1.43 mmol (equivalent to 1.16 molar times with respect to an active end) of 2,2-dimethoxy-8-(4-methylpiperazinyl)methyl-1,6-dioxa-2-silacyclooctane was added and reacted for 30 minutes. Subsequently, as a polymerization terminator, methanol in an amount equivalent to 2 molar times of n-butyllithium used was added to obtain a solution containing a conjugated diene rubber. Further, with respect to 100 parts of the conjugated diene rubber, 0.15 parts of Irganox 1520 L (made by Ciba Specialty Chemicals) was added as an antiaging agent to the solution, then steam stripping was performed to remove the solvent and remainder was dried in vacuo at 60°C for 24 hours to obtain a solid conjugated diene rubber. The obtained conjugated diene rubber of Example 1 had a weight average molecular weight (Mw) of 241,000, a molecular weight distribution (Mw/Mn) of 1.26, a coupling rate of 34.0%, and a bonded styrene amount of 21.0 wt%.

### [Example 2]

Except for using, instead of 0.95 mmol of di-N-hexylamine, 0.95 mmol of pyrrolidine, the same procedure was followed as in Example 1 to obtain a solid conjugated diene rubber. The obtained conjugated diene rubber of Example 2 had a weight average molecular weight (Mw) of 239,000, a molecular weight distribution (Mw/Mn) of 1.27, a coupling rate of 33.5%, and a bonded styrene amount of 21.0 wt%.

### [Example 3]

Except for using, instead of 0.95 mmol of di-N-hexylamine, 0.95 mmol of hexamethyleneimine, the same procedure was followed as in Example 1 to obtain a solid conjugated diene rubber. The obtained conjugated diene rubber of Example 3 had a weight average molecular weight (Mw) of 246,000, a molecular weight distribution (Mw/Mn) of 1.26, a coupling rate of 31.0%, and a bonded styrene amount of 21.0 wt%.

### [Example 4]

Except for using, instead of 1.43 mmol of 2,2-dimethoxy-8-(4-methylpiperazinyl)methyl-1,6-dioxa-2-silacyclooctane, 1.43 mmol (equivalent to 1.16 molar times with respect to an active end) of 2-methoxy-2-methyl-8-(4-methylpiperazinyl)methyl-1,6-dioxa-2-silacyclooctane, the same procedure was followed as in Example 1 to obtain a solid conjugated diene rubber. The obtained conjugated diene rubber of Example 4 had a weight average molecular weight (Mw) of 266,000, a molecular weight distribution (Mw/Mn) of 1.30, a coupling rate of 38.5%, and a bonded styrene amount of 21.0 wt%.

### [Example 5]

Except for using, instead of 1.43 mmol of 2,2-dimethoxy-8-(4-methylpiperazinyl)methyl-1,6-dioxa-2-silacyclooctane, 1.43 mmol (equivalent to 1.16 molar times with respect to an active end) of 2,2-diethoxy-8-(4-methylpiperazinyl)methyl-1,6-dioxa-2-silacyclooctane, the same procedure was followed as in Example 1 to obtain a solid conjugated diene rubber. The obtained conjugated diene rubber of Example 5 had a weight average molecular weight (Mw) of 246,000, a molecular weight distribution (Mw/Mn) of 1.25, a coupling rate of 32.5%, and a bonded styrene amount of 21.0 wt%.

### [Comparative Example 1]

Except for using, instead of 1.43 mmol of 2,2-dimethoxy-8-(4-methylpiperazinyl)methyl-1,6-dioxa-2-silacyclooctane, 0.29 mmol (equivalent to 0.24 molar times with respect to an active end) of tetramethoxysilane, the same procedure was followed as in Example 1 to obtain a solid conjugated diene rubber. The obtained conjugated diene rubber of Comparative Example 1 had a weight average molecular weight (Mw) of 520,000, a molecular weight distribution (Mw/Mn) of 1.30, a coupling rate of 85.0%, and a bonded styrene amount of 21.0 wt%.

### [Comparative Example 2]

Except for not adding 0.95 mmol of di-N-hexylamine, the same procedure was followed as in Comparative Example 1 to obtain a solid conjugated diene rubber. The obtained conjugated diene rubber of Comparative Example 2 had a weight average molecular weight (Mw) of 511,000, a molecular weight distribution (Mw/Mn) of 1.30, a coupling rate of 83.5%, and a bonded styrene amount of 21.0 wt%.

### [Reference Example 1]

Except for not adding 0.95 mmol of di-N-hexylamine, the same procedure was followed as in Example 1 to obtain a solid conjugated diene rubber. The obtained conjugated diene rubber of Reference Example 1 had a weight average molecular weight (Mw) of 261,000, a molecular weight distribution (Mw/Mn) of 1.25, a coupling rate of 33.0%, and a bonded styrene amount of 21.0 wt%.

### [Production and Evaluation of Rubber Composition and Cross-Linked Rubber]

In a volume 250 ml Brabender type mixer, 100 parts of the conjugated diene rubber of Example 1 were masticated for 30 seconds, next 50 parts of silica (made by Rhodia, product name "Zeosil 1115MP"), 20 parts of process oil (made by Nippon Oil Corporation, product name "Aromax T-DAE"), and 6.0 parts of the silane coupling agent bis(3-(triethoxysilyl)propyl)tetrasulfide (made by Degussa, product name "Si69") were added and kneaded at a starting temperature of 110°C for 1.5 minutes, then 25 parts of silica (made by Rhodia, product name "Zeosil 1115MP"), 3 parts of zinc oxide, 2 parts of stearic acid, and 2 parts of the antiaging agent N-phenyl-N'-(1,3-dimethylbutyl)-p-phenylene diamine (made by Ouchi Shinko Chemical Industrial, product name "Nocrac 6C") were added and the mixture was further kneaded for 2.5 minutes, then the kneaded material was discharged from the mixer. The temperature of the kneaded material after the end of kneading was 150°C. The kneaded material was cooled down to room temperature, then was again kneaded in a Brabender mixer at a starting temperature of 110°C for 2 minutes, then the kneaded material was discharged from the mixer. Next, using open rolls at 50°C, to the obtained kneaded material, 1.4 parts of sulfur, 1.2 parts of the cross-linking accelerator N-tert-butyl-2-benzothiazolesulfenamide (product name "Noccelar NS-P", made by Ouchi Shinko Chemical Industrial), and 1.2 parts of 1,3-diphenylguanidine (product name "Noccelar D", made by Ouchi Shinko Chemical Industrial) were added. These were kneaded, then a sheet-shaped rubber composition was taken out. This rubber composition was pressed to cross-link it at 160°C for 20 minutes to prepare a test piece of cross-linked rubber and this test piece was evaluated for wet grip and low heat buildup.

Further, the conjugated diene rubbers of Examples 2 to 5, Comparative Examples 1 and 2, and Reference Example 1 were respectively similarly processed to prepare rubber compositions and test pieces of cross-linked rubbers and these test pieces were evaluated for wet grip and low heat buildup. Table 1 shows these results together.

### [Table 1]

**Table 1**

| | Polymerization initiator | Modifying agent | Wet grip (Index) | Low Heat Buildup (Index) |
|---|---|---|---|---|
| Example 1 | 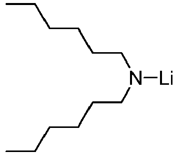 | 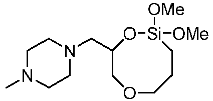 | 105 | 88 |
| Example 2 | 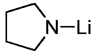 | 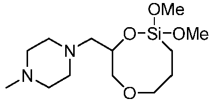 | 106 | 89 |
| Example 3 | 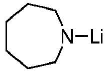 | 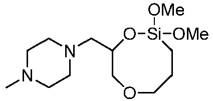 | 105 | 89 |
| Example 4 | 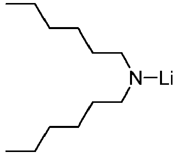 | 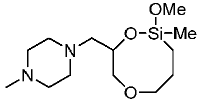 | 106 | 90 |
| Example 5 | 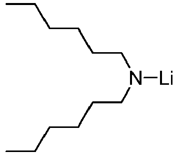 | 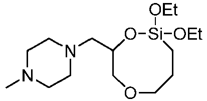 | 106 | 89 |
| Comparative Example 1 | 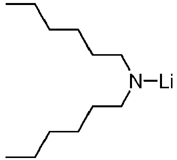 | 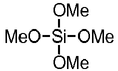 | 95 | 120 |
| Comparative Example 2 | 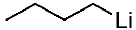 | 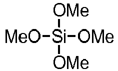 | 93 | 125 |
| Reference Example 1 | 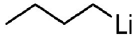 | 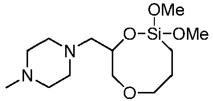 | 100 | 100 |

As will be understood from Table 1, the cross-linked rubbers obtained using the conjugated diene polymers of the present invention (Examples 1 to 5) obtained by the method of production of the conjugated diene polymer of the present invention are superior to cross-linked rubbers obtained using the conjugated diene polymers (Comparative Examples 1 and 2) obtained by the method of production without using the modifying agent predetermined by the present invention in low heat buildup and wet grip.

Further, the cross-linked rubber obtained by using the conjugated diene polymer (Reference Example 1) obtained by the method of production, where the modifying agent predetermined by the present invention is used as a modifying agent but an organic alkali metal amide compound was not used as the polymerization initiator, is superior to the cross-linked rubbers obtained using the conjugated diene polymers (Comparative Examples 1 and 2) obtained by the method of production without using the modifying agent predetermined by the present invention in low heat buildup and wet grip. However, the cross-linked rubbers obtained using the conjugated diene polymers of the present invention (Examples 1 to 5) obtained by the method of production of a conjugated diene polymer of the present invention had more notable improvement effect in low heat buildup and wet grip.

## Claims

1. A conjugated diene polymer represented by the following formula (1): 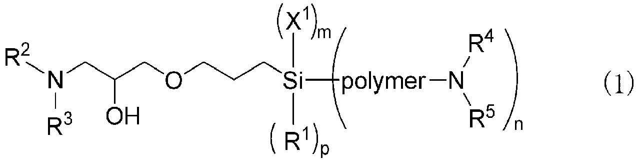 wherein, in the formula (1), the "polymer" represents a polymer chain containing conjugated diene monomer units, X¹ represents a functional group selected from a hydrocarbyloxy group, halogen group, and hydroxyl group, R¹ represents a substituted or unsubstituted hydrocarbon group, R² and R³ respectively represent a substituted or unsubstituted hydrocarbon group, R² and R³ may bond with each other to form a ring structure together with the nitrogen atom to which they are bound, when forming the ring structure they may form a ring structure together with a hetero atom other than the nitrogen atom to which they are bound in addition to the nitrogen atom to which they are bound, R⁴ and R⁵ respectively represent a hydrogen atom, alkyl group, cycloalkyl group, aryl group, aralkyl group, a protecting group for amino group, or a group which produces a hydroxyl group when hydrolyzed, R⁴ and R⁵ may bond with each other to form a ring structure together with the nitrogen atom to which they are bound, when forming the ring structure they may form a ring structure together with a hetero atom other than the nitrogen atom to which they are bound in addition to the nitrogen atom to which they are bound, "n" is an integer of 1 to 3, "m" is an integer of 0 to 2, "p" is an integer of 0 to 2, and n+m+p = 3.

2. The conjugated diene polymer according to claim 1 represented by the following formula (2): 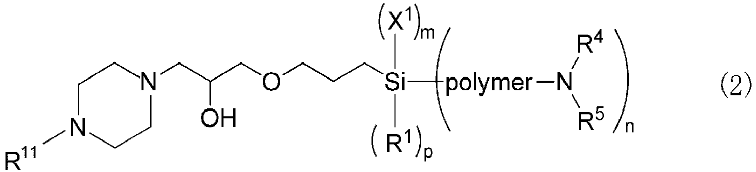 wherein, in the formula (2), the "polymer", X¹, R¹, R⁴, R⁵, n, m, and p represent the same as those defined in the formula (1), R¹¹ represents a hydrocarbon group, and n+m+p = 3.

3. A rubber composition comprising 100 parts by weight of a rubber ingredient containing the conjugated diene polymer according to claim 1 or 2, and 10 to 200 parts by weight of silica.

4. The rubber composition according to claim 3 further comprising a cross-linking agent.

5. A cross-linked rubber obtained by cross-linking the rubber composition according to claim 4.

6. A tire comprising the cross-linked rubber according to claim 5.

7. A method of production of a conjugated diene polymer comprising
a step of polymerizing a monomer containing a conjugated diene compound in an inert solvent using an organic alkali metal amide compound so as to obtain a conjugated diene polymer chain having an active end, and
a step of reacting a compound represented by the following formula (3) with the active end of the conjugated diene polymer chain having an active end: 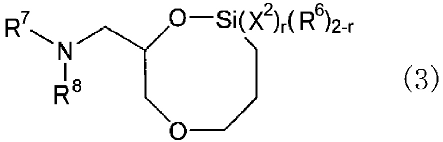 wherein, in the formula (3), X² represents a functional group selected from a hydrocarbyloxy group, halogen group, and hydroxyl group, R⁶ represents a substituted or unsubstituted hydrocarbon group, R⁷ and R⁸ respectively represent a substituted or unsubstituted hydrocarbon group, R⁷ and R⁸ may bond with each other to form a ring structure together with the nitrogen atom to which they are bound, when forming the ring structure they may form a ring structure together with a hetero atom other than the nitrogen atom to which they are bound in addition to the nitrogen atom to which they are bound, "r" is an integer of 0 to 2.

8. The method of production of a conjugated diene polymer according to claim 7, wherein the organic alkali metal amide compound is a compound represented by the following formula (4): 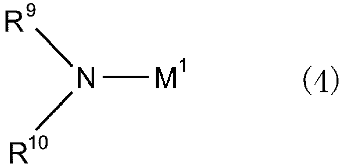 wherein, in the formula (4), M¹ represents an alkali metal atom, R⁹ and R¹⁰ respectively represent an alkyl group, cycloalkyl group, aryl group, aralkyl group, a protecting group for amino group, or a group which produces a hydroxyl group when hydrolyzed, R⁹ and R¹⁰ may bond with each other to form a ring structure together with the nitrogen atom to which they are bound, when forming the ring structure they may form a ring structure together with a hetero atom other than the nitrogen atom to which they are bound in addition to the nitrogen atom to which they are bound.

9. The method of production of a conjugated diene polymer according to claim 7 or 8, wherein the compound represented by the formula (3) is a compound represented by the following formula (5): 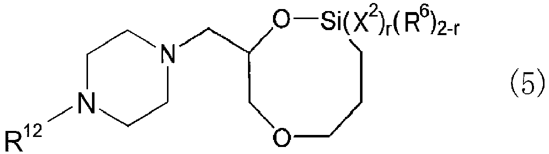 wherein, in the formula (5), X², R⁶ and r represent the same as those defined in the formula (3), R¹² represents a hydrocarbon group.
